Europäisches Patentamt

European Patent Office

Office européen des brevets

Publication number: **0 274 917**

**A2**

## EUROPEAN PATENT APPLICATION

Application number: 87311545.5

Int. Cl.⁴: **G01C 21/20**

Date of filing: **31.12.87**

Priority: **02.01.87 GB 8700035**
**16.05.87 GB 8711604**

Date of publication of application:
**20.07.88 Bulletin 88/29**

Designated Contracting States:
**BE DE ES FR GB GR IT NL SE**

Applicant: **McNair, Hugh**
**"Ben a Ski", Unit 5 Ballintuim Hotel Park**
**Ballintuim By Bridge of Cally PH10 7NH**
**Scotland(GB)**

Inventor: **McNair, Hugh**
**"Ben a Ski", Unit 5 Ballintuim Hotel Park**
**Ballintuim By Bridge of Cally PH10 7NH**
**Scotland(GB)**

Representative: **Wotherspoon, Graham et al**
**FITZPATRICKS 4 West Regent Street**
**Glasgow G2 1RS Scotland(GB)**

### Multi-function navigation instrument.

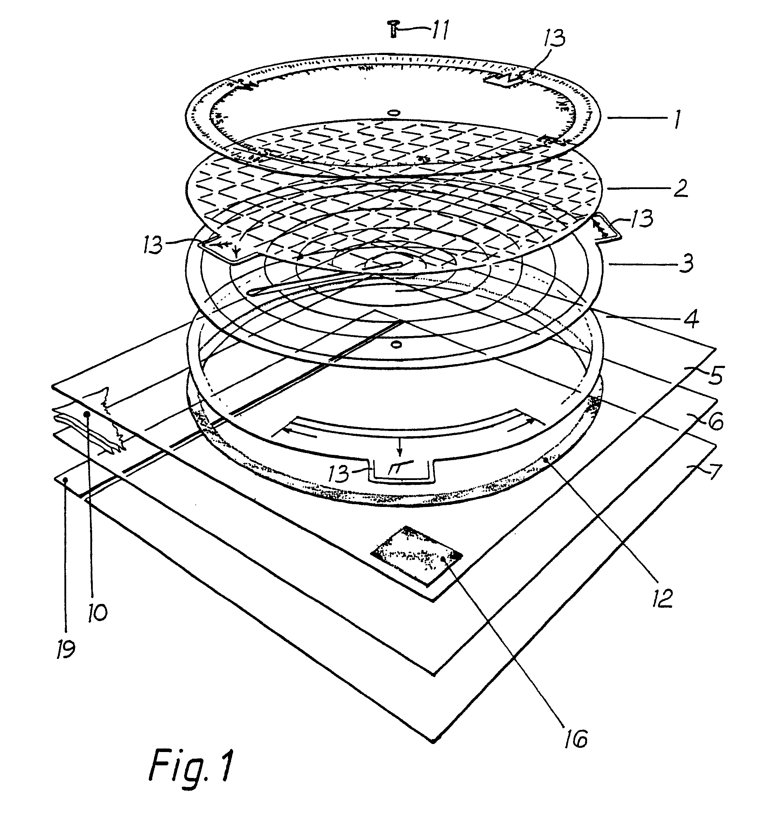

The instrument comprises transparent discs (1-3) rotatably mounted on a base (6). A first disc (1) carries a compass rose, and a third disc (3) a scale grid. A second disc (2) carries circles to the same scale as the grid, and can be moved radially. Each of the discs (1-3) can be independently locked in position relative to the base (6). The discs can be manipulated to perform navigational plotting and calculation (eg of tidal vector triangles) in a simple and rapid manner. In the preferred embodiment of Fig 1, the instrument also forms a protective case for a folded chart (10).

Fig. 1

EP 0 274 917 A2

# Multi-functional navigation instrument

This invention relates to an instrument for use in navigation for plotting and calculating positions and courses.

The instrument is particularly intended for use in small sailing craft and light aircraft. Traditional navigational chartwork makes use of dividers, compasses and parallel rules. This works well on commercial craft where a chartroom with a large chart table can be provided. In small craft, however, there is often insufficient space to provide such a table. Also, small craft sailors frequently have to carry out at least part of their navigation while helming in an open cockpit, which can lead to charts becoming wet and sustaining damage.

It is known to provide protective cases for charts, but it is difficult to carry out plotting or course calculations on these. There are also known a variety of plotting instruments which aim to simplify navigational procedures; however these are generally directed at some single procedure and still require the use of a chart table.

Accordingly, an object of the present invention is to provide a navigational instrument which provides for both the calculation and the plotting of courses allowing for tidal set, leeway and similar effects, in a simple and convenient manner.

In a preferred form, the instrument also provides a protective covering and a support for the chart.

Embodiments of the invention will now be described, by way of example only, with reference to the drawings, in which:

Fig 1 is a schematic exploded perspective view of a first embodiment of the invention:

Figs 2-5 are plan views showing discs used in the embodiment of Fig 1;

Fig 6 shows the appearance of the discs when superimposed;

Fig 7 illustrates use of the instrument in one navigational application;

Fig 8 is a view similar to Fig 1 showing another embodiment of the invention; and

Fig 9 is a plan view of the second embodiment.

Referring to Fig 1, the instrument comprises a base board 6, suitably of a stiff transparent plastics material and about 15 inches square. In use, a chart 10 is folded to fit within the base board 6 with the area of interest uppermost. A clear flexible plastics cover 5 covers the chart 10 and holds it to the base board 6. A plurality of clear flexible plastics discs 1-4 are rotatably mounted to the cover 5 by means of a fastener 11. Means are provided for locking the position of each disc in relation to the cover 5; for example in the form of a locking ring 12 on the cover 5 and tabs 13 on the rings formed of VELCRO (trade mark) hook-and-loop material.

The cover 5 and discs 1-4 may for example be of 480 gauge polyethylene, and the indicia to be described may suitably be printed thereon with an etching ink. The fastener 11 may be a rivet, or may comprise a press-stud fastener with one part secured in the cover 5 and the other part to the discs 1-4, thus allowing the discs to be removed as a unit when desired.

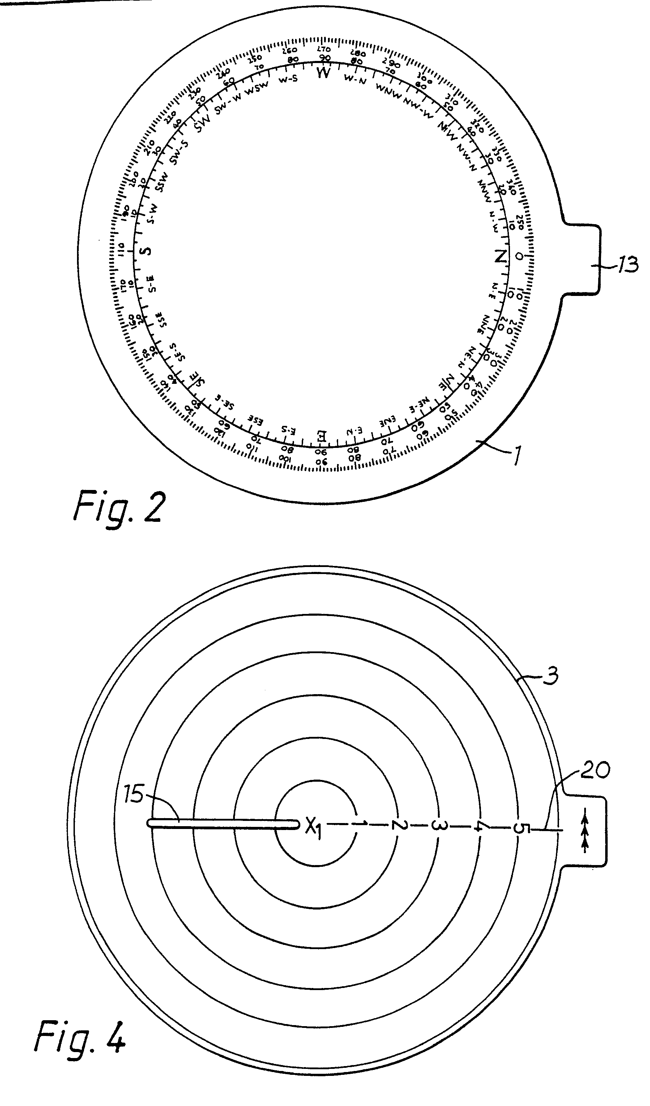

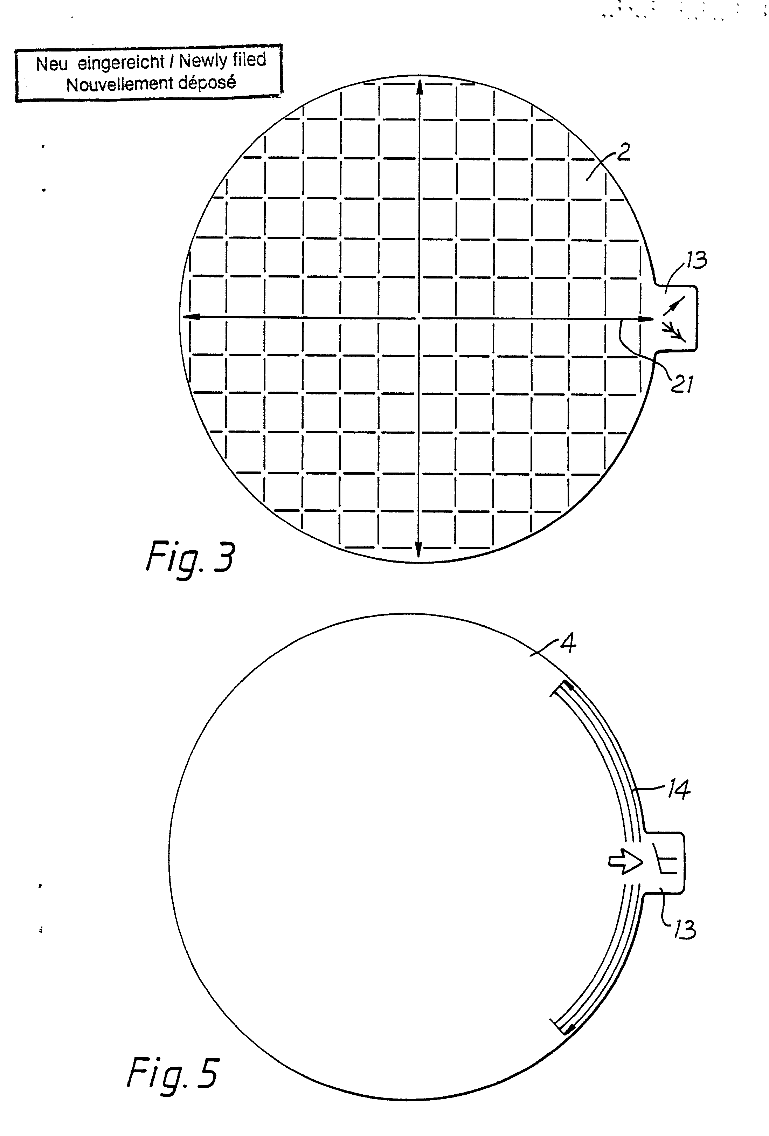

The discs are as follows. The topmost disc 1 is a compass rose (Fig 2). The next disc 2 carries a grid pattern (Fig 3) with a grid spacing corresponding to one nautical mile at a scale of 1:100,000. The bottom disc 4 carries a sector marking 14 corresponding to the windward "no-go" zone for a sailing boat; this disc is optional. The three discs 1, 2 and 4 are simply rotatable about the fastener 11.

The remaining disc 3 is formed with a slot 15 through which the fastener 11 passes so that it may be moved radially of the assembly. It is marked with concentric rings at radii corresponding to the grid spacing of the disc 2, ie corresponding to steps of 1 nm at a scale of 1:100,000.

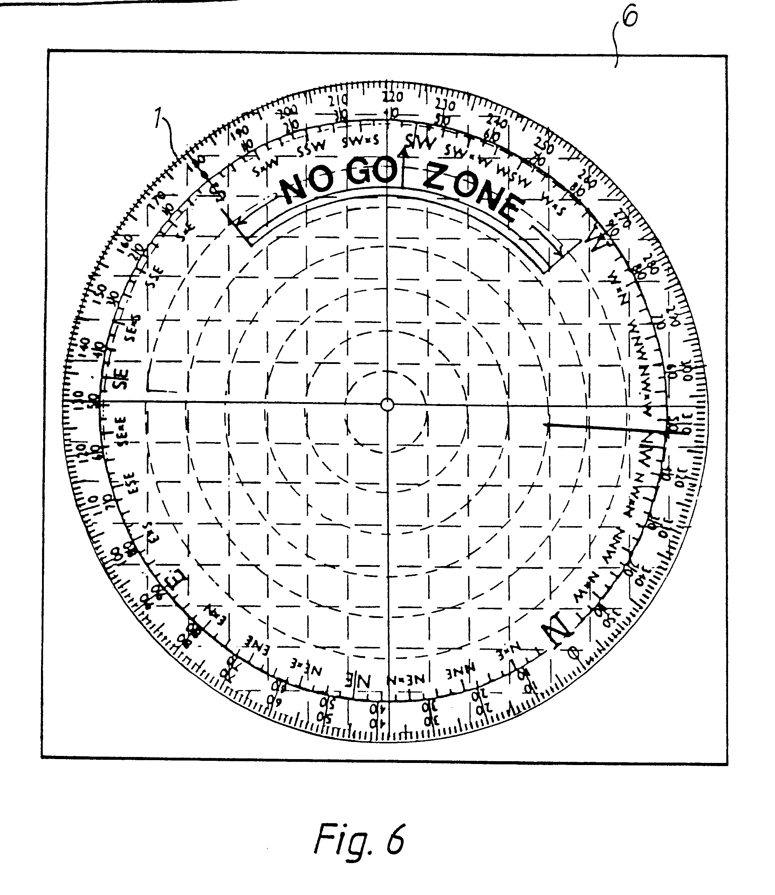

Fig 6 illustrates the overall appearance with the disc 3 positioned slightly off centre.

In use, the chart is folded and inserted as described above. It is not necessary for the chart to be in any particular alignment with the instrument. The compass rose on disc 1 is then aligned with true North (or magnetic North if preferred) on the chart, and locked in that position. All markings can be made on the uppermost surfaces with a spirit marker or the like, and wiped off after use.

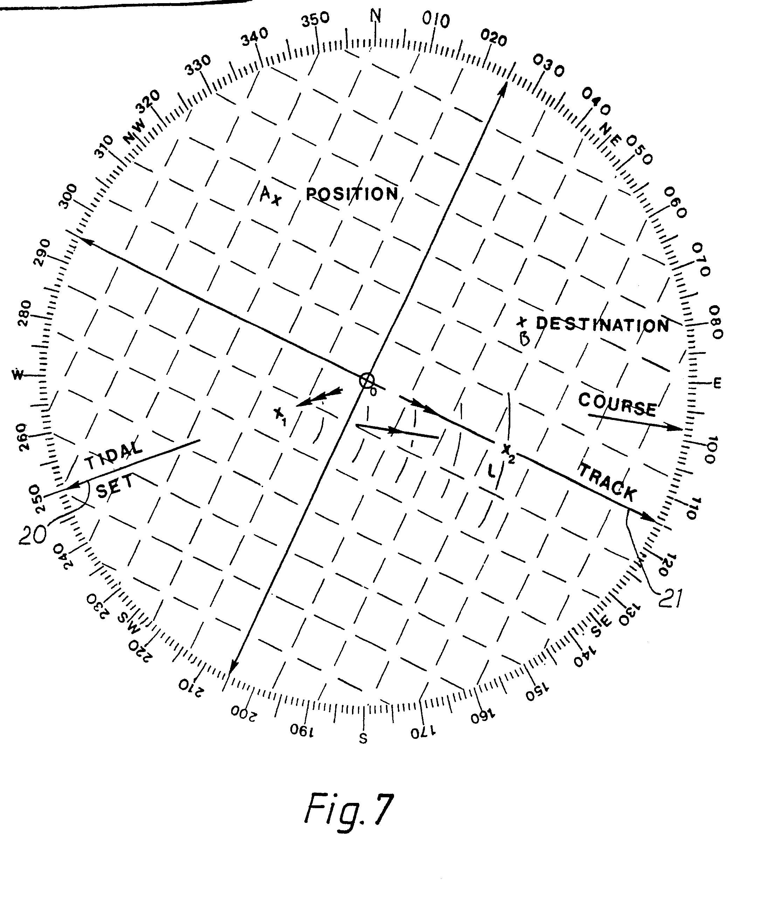

As one example of use of the instrument reference is made to Fig 7. Assume it is desired to sail from point A to point B. These points are marked with crosses. The ground track direction can be read by rotating the disc 2 until the grid is aligned with the direction AB (which can be satisfactorily judged by eye, without drawing an actual line from A to B) and the direction read from arrowhead 15 (Fig 3) against the compass rose. The distance over the ground can be read to a suitable approximation by counting grid lines and interpolation.

Assume now that a tide is setting 250° at 2 knots. Assume further that the boat speed is 5 knots. The tidal vector triangle is then solved as follows:

1. Set the tidal disc to the tidal direction (by aligning the line 20 (Fig 4) with 250° on the compass rose).

2. Pull the tidal disc radially until it is displaced by the distance representing tidal speed, ie in this example to position the second ring over the centre O of the grid.

3. From the centre $X_1$ of the tidal disc, count the circles representing boat speed through the water. Where the appropriate circle, 5 in this example, intersects the grid datum line mark $X_2$.

4. Count the squares from O to $X_2$ to obtain boat speed over the ground.

5. Rotate the grid disc to align the grid lines with $X_1$ and $X_2$ and read off the course to steer from the datum 21 (Fig 3) against the compass rose.

It should be noted that the scale used for the vector triangle may be different from that of the chart, so long as the sides of the triangle are in proportion. Using a scale of 1 knot per square and circle gives a triangle of a size suitable for good accuracy for small sailing craft.

The whole operation is carried out in a convenient manner without use of rule or dividers. It can be performed in the cockpit on the helmsman's lap. The carrying out of other navigational plots and calculations, such as fix by cross-bearings, will be readily apparent.

The preferred scale factor gives ease of use with the commonest chart scales of 1:100,000 and 1:50,000. Other scales of charts may be used; it is only necessary for the navigator to establish at the outset the distance represented by each square and circle.

The cover 5 may be secured to the base board 6 in a variety of ways. One preferred method is by strips of VELCRO along two edges. In this case, the chart may be folded into a strip which can be pulled through the instrument as the voyage progresses, the excess length being folded beneath the base board 6. A backing board 7 may be secured in a similar manner behind the base board 6 to cover such lengths. The backing board 7 may suitably be of rigid white plastics sheet and may be printed with columns to facilitate the keeping of a deck log. Other useful navigational items may be secured to the instruments for example an electronic clock may be secured to a pad 16, and a ruler 19 bearing suitable scales may be removably affixed to the underside of the base board 6.

Alternatively, the cover 5 can be hinged to the base board 6 along one edge.

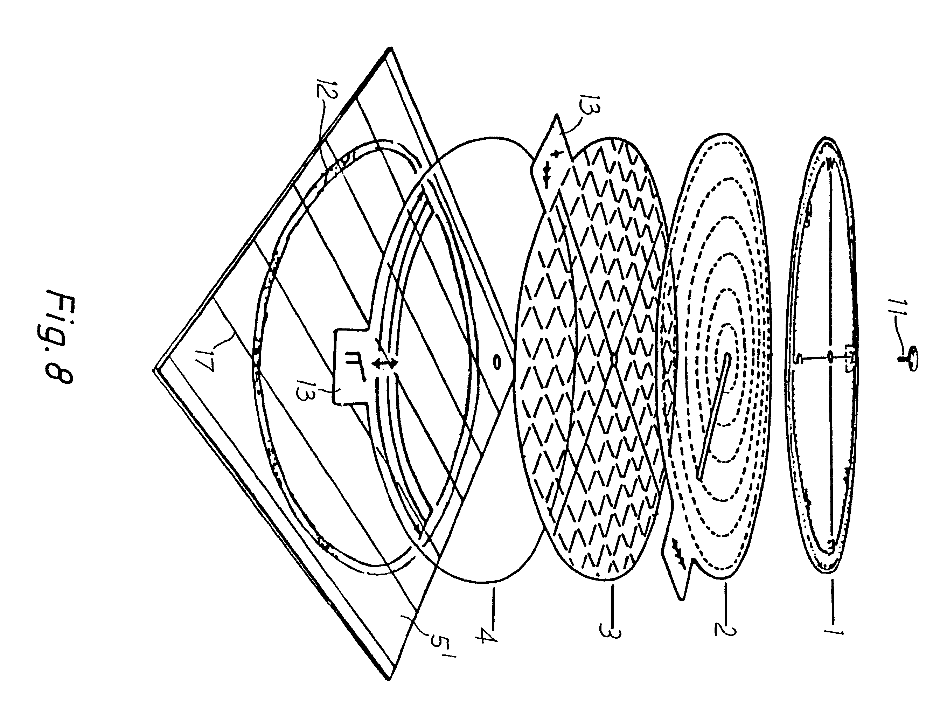

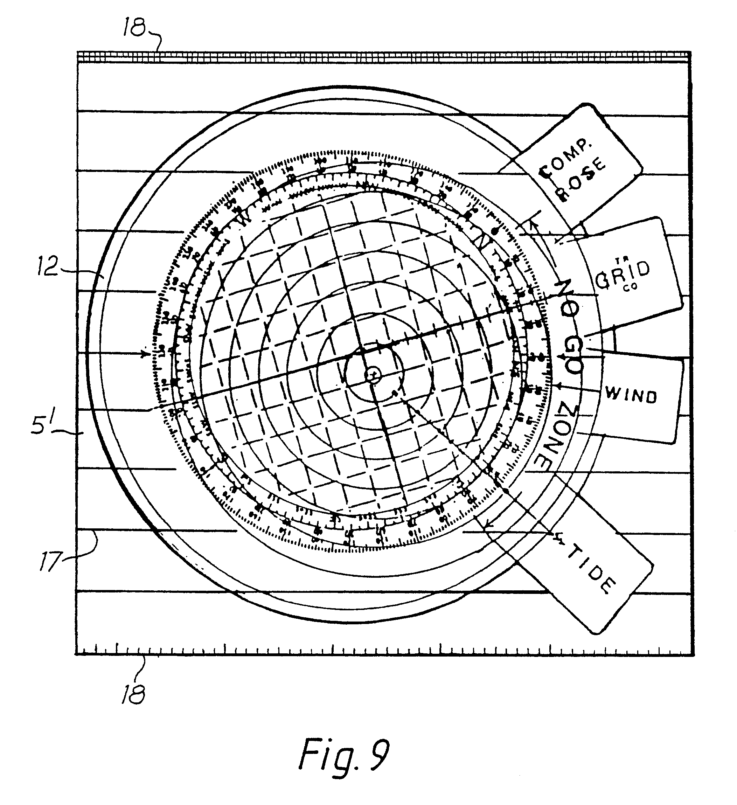

A modified embodiment is shown in Figs 8 and 9, in which like parts are denoted by like reference numerals. This embodiment is intended for use on top of a chart spread on a chart table. To this end rings 1-4 are mounted on a base 5' of clear rigid plastics material such as PERSPEX (trade mark), the assembly suitably being about 6 inches square overall. The instrument is used in the same general manner as the foregoing embodiment, but can be aligned with chart north by means of lines 17 on the base 5', and the base 5' is provided with scales 18 on its edges to act as rules. With this embodiment, track lines, positions and fixes would be drawn on the chart, and vector triangles on the instrument itself, as would DR and EP calculations.

The instrument of the present invention provides a number of practical advantages. In particular, the preferred embodiment has the following features:

## Safety

No sharp instruments are used in plotting. The instrument is of non-magnetic materials.

## Accuracy

The compass rose is large (14") and no errors arise from shippage of parallel rules.

## Speed

Dead reckoning, estimated position, and vector triangles can be plotted quickly with a minimum of drawing. Distance and bearing to destination can be directly read off.

## Cleanliness

The surface of the chart is protected and remains unmarked in use.

## Claims

1. A navigational instrument, comprising
   a transparent bottom member,
   a plurality of superimposed transparent discs mounted on the bottom member for independent rotation about an axis,
   a first one of the discs carrying a compass rose,
   a second one of the discs carrying a grid pattern representing a predetermined scale factor,
   a third one of the discs carrying concentric circles representing a predetermined scale factor, said third disc being also movable in translation across the base member, and
   means for selectively locking each disc in position relative to the bottom member.

2. The instrument of claim 1, including a fourth disc carrying a marking representing an upwind sector into which a sailing vessel cannot sail.

3. The instrument of claim 1 or claim 2, in which the discs are apertured for rotational mounting on a stud member, and said third disc has a radial slot to permit radial movement relative to the stud member.

4. The instrument of any preceding claim, in which said locking means comprises a ring of hook-and-loop fastener material on the bottom member outwardly of the discs, and tabs projecting from the discs and carrying like material.

5. The instrument of any preceding claim, in which said bottom member is mounted in an operable manner on a base board such that a chart can be placed therebetween.

6. The instrument of claim 5, in which the bottom member is releasably secured to the base board.

7. The instrument of claim 5, in which the bottom member is hinged to the base board.

8. The instrument of any of claims 1 to 4, in which the bottom member is a rigid member provided with alignment marks for use on top of a chart.

9. The instrument of any of claims 5 to 8, in which the discs are releasably secured to the bottom member and can be removed as a unit.

*Fig. 1*

0 274 917

Fig. 2

13

1

Fig. 4

3

20

15

X₁ — 1 — 2 — 3 — 4 — 5

Fig. 3

Fig. 5

Fig. 6

*Fig.7*

Fig. 8

*Fig. 9*